# EUROPÄISCHE PATENTSCHRIFT

(11) **EP 1 064 412 B1**
(45) Veröffentlichungstag und Bekanntmachung des Hinweises auf die Patenterteilung: **11.09.2002**
(21) Anmeldenummer: 99909983.1
(22) Anmeldetag: 16.03.1999
(51) Int. Cl.: C22B 7/04, C22B 15/00, C22B 23/02

(54) **VERFAHREN ZUM UMWANDELN VON SCHLACKEN AUS DER NICHT-EISENMETALLURGIE**
METHOD FOR TRANSFORMING SLAG DERIVED FROM NON-IRON METALLURGY
PROCEDE POUR LA TRANSFORMATION DES SCORIES PROVENANT DE LA METALLURGIE DES METAUX NON FERREUX

(30) Priorität: 17.03.1998 AT 46898
(43) Veröffentlichungstag der Anmeldung: 03.01.2001
(73) Patentinhaber: Holcim Ltd., 8645 Jona (CH)
(72) Erfinder: EDLINGER, Alfred, CH-5400 Baden (CH)
(74) Vertreter: Haffner, Thomas M., Dr.
(86) Internationale Anmeldenummer: AT9900066
(87) Internationale Veröffentlichungsnummer: WO99047715

(56) Entgegenhaltungen:
- EP-A- 0 707 083
- EP-A- 0 801 136
- US-A- 1 822 588
- US-A- 4 349 383

## Beschreibung

Die Erfindung bezieht sich auf ein Verfahren zum Umwandeln von Schlacken aus der Nicht-Eisenmetallurgie, insbesondere von primären und sekundären Ni- und Cu-Hüttenschlacken unter Rückgewinnung und/oder Anreicherung der Nichteisenmetalle und Ausbildung von synthetischen Puzzolanen, bei welchem die flüssigen oxidischen Schlacken einer zweistufigen Reduktion mit einer über einem Eisenbad vorgenommenen zweiten Reduktionsstufe unterworfen werden.

Ein derartiges Verfahren kann beispielsweise der EP 707 083 entnommen werden.

Ni-, Cu- und Co-hältige Verhüttungsschlacken fallen insbesondere in der Nickelmetallurgie an. Die fayalitischen Ni-Hüttenschlacken enthalten in der Regel etwa 1 Gew.% Ni, 0,7 Gew.% Cu sowie 0,25 Co. Die Schlacken fallen als saure Schlacken an, wobei die Basizität CaO/SiO₂ üblicherweise in der Größenordnung von 0,1 bis 0,4 liegt. Für die Erzeugung einer synthetischen Hochofenschlacke sind derartige Schlacken prinzipiell unter Kalkzusatz geeignet, wobei allerdings der hohe Buntmetallgehalt eine unmittelbare verwendung nicht möglich erscheinen läßt.

Oxidische Schlacken fallen nicht nur in der Nicht-Eisenmetallurgie, sondern beispielsweise auch bei der Müllverbrennung oder bei der Verbrennung von Autoshredderleichtfraktionen an. Auch derartige Schlacken weisen zumeist relativ hohe Buntmetallanteile auf.

In der US 1822588 wurde bereits vorgeschlagen, eine eisenhaltige Kupferschlacke über einer Matte zu reduzieren, beispielsweise mit pulverisierter Kohle oder mit CO Gas.

In der EP-A 801 136 wurde bereits vorgeschlagen, oxidische Schlacken unterschiedlicher Provenienz und unterschiedlicher Belastung mit Schwermetalloxiden oder toxischen Substanzen dadurch aufzuarbeiten, daß diese über einem eine Eisenlegierung enthaltenden Metallbad reduziert werden. Als Metallbad wurde in diesem Zusammenhang Eisen, Eisennickel, Eisenkupfer oder Zinnlegierungen vorgeschlagen, wobei das Redoxpotential durch Zusatz von Aluminium, FeSi oder Kohlenstoff so eingestellt wurde, daß FeO nicht oder höchstens teilweise zu Fe metallisch aus der Schlacke reduziert wurde. Die in diesem Zusammenhang regelmäßig erforderlichen hohen Zusätze an Kohlenstoff haben den Einsatz von hochwertiger Kohle vorausgesetzt, wobei das Metallbad entsprechend mit Kohlenstoff angereichert werden mußte. Die in diesem Zusammenhang erforderlichen Unterbaddüsen sind relativ aufwendig und erfordern eine mehr oder minder aufwendige Kühlung, da beim Einblasen von Kohlenstoff und Sauerstoff in Eisenlegierungen stark exotherme Reaktionen beim Einblasen beobachtet werden.

Die Erfindung zielt nun darauf ab, ein Verfahren der eingangs genannten Art zu schaffen, mit welchem Schlacken aus der Nicht-Eisenmetallurgie in besonders einfacher Weise und mit besonders einfachen Einrichtungen aufgearbeitet werden können und die Nichteisenmetalle in hohem Maße rückgewonnen bzw. angereichert werden können. Zur Lösung dieser Aufgabe besteht das erfindungsgemäße Verfahren im wesentlichen darin, daß die flüssigen oxidischen Schlacken in einer ersten Reduktionsstufe über einem Cu und/oder Ni und ggf. Co enthaltenden Metallbad mit H₂ und CO enthaltenden Gasen, wie z.B. Spaltgas, reduziert werden, wobei das Redoxpotential des CO/H₂-Gemisches durch Beimengen von 10 bis 40 Vol.% H₂O-Dampf und/oder CO₂ verringert wird, um die Reduktion von Fe-Oxiden hintanzuhalten, worauf die verbleibende Cu- und Ni-freie Schlacke anschließend über einem Eisenbad unter Einsatz von Kohlenstoff zur Reduktion des Fe-Oxidanteiles zur Herstellung einer Fe- und buntmetallfreien Schlacke weiterreduziert wird. Dadurch, daß nun anstelle eines Eisenbades, welchem ggf. Nickel zulegiert wurde, unmittelbar ein Kupfer- oder Nickelbad eingesetzt wird bzw. ein Cu-, Ni- und Co-enthaltendes Metallbad vorgelegt wird, kann auf das Einblasen von Kohlenstoff verzichtet werden und es können die thermischen Probleme, wie sie beim Einblasen von Kohlenstoff/O₂ in Eisenbäder auftreten, vermieden werden. Ein Cu-, Ni- und ggf. Co-enthaltendes Metallbad kann erfindungsgemäß mit Spaltgas.gespült werden, wobei der Wasserstoffanteil im Cu-, Ni- und ggf. Co-Bad in Lösung geht und das jeweils gewünschte Redoxpotential zur selektiven Abtrennung von Nichteisenmetallen in einfacher Weise durch Einstellung des Wasserstoff- und Kohlenmonoxidgehaltes im Gas beherrscht werden kann. Prinzipiell soll der Anteil an Eisen, welcher aus der Schlacke reduziert wird, so gering wie nur möglich gehalten werden, was naturgemäß bei Einblasen von Kohlenstoff in ein Eisenbad nicht ohne weiteres gelingt. Das geforderte Redoxpotential kann beispielsweise über die freie Enthalpie definiert werden, wobei die geförderten Werte beispielsweise dem Richardson-Diagramm für Sauerstoffpotentiale von Oxidsystemen entnommen werden können. Eine derartige freie Enthalpie läßt sich nun in besonders einfacher Weise durch die erfindungsgemäße Wahl von H₂ und CO enthaltenden Gasen zur Einstellung des Redoxpotentiales gewährleisten, da im Rahmen der Erfindung das Redoxpotential durch Beimengungen von H₂O-Dampf entsprechend variiert werden kann und daher ein entsprechend einem Standardverfahren hergestelltes Spaltgas eingesetzt werden kann. Der Wasserstoff des Spaltgases löst sich weitestgehend in der flüssigen Rohkupferschmelze und erhöht damit deren Reduktionspotential gegenüber einer schwermetallhältigen Schlackenschmelze, wohingegen das Kohlenmonoxid des Spaltgases weitestgehend durch das Bad hindurchgeleitet werden und im Konvertergasraum nachverbrannt werden kann. Eine derartige Nachverbrennung erlaubt es in einfacher Weise die chemische Wärmeenergie auf das mehrphasige Schmelzbad in besonders hohem Grade zu übertragen, um die Reduktionsarbeit der Schwermetalle der Schlackenschmelze aufzubringen sowie die Wärmeverluste des Konverters auszugleichen. Die Schlackenschmelze kann gewünschtenfalls auf die Bedürfnisse eines hochwertigen Zementzuschlages eingestellt werden und auf eine Basizität CaO zu SiO₂ etwa 1,5 und an den Al₂O₃-Gehalt von etwa 15 Gew.% eingestellt werden. Die erste Reduktionsstufe unter Verwendung von Spaltgas kann somit durch Wahl entsprechender Beimengungen von H₂O-Dampf im Ausmaß von 10 bis 40 Vol.% sehr exakt gesteuert werden, sodaß tatsächlich der Anteil an Eisenoxiden der Schlacke, welche in das Metallbad reduziert werden, gering gehalten werden kann, spdaß unmittelbar ein hochwertiger Regulus erzielt wird, welcher in einfacher Weise der Rückgewinnung der Buntmetalle bzw. Nichteisenmetalle zugeführt werden kann.

Das jeweilige Reduktionsgleichgewicht wird hiebei durch das sogenannte Baur-Glaessner-Diagramm beschrieben, wobei sich ergibt, daß in besonders vorteilhafter Weise das erfindungsgemäße Verfahren so durchgeführt werden kann, daß in der ersten Reduktionsstufe Spaltgas mit einer Zusammensetzung von 10 bis 75 Vol.% CO, bezogen auf CO₂ und CO, und 3 bis 55 Vol.% H₂, bezogen auf H₂O und H₂, eingesetzt wird.

In besonders vorteilhafter Weise eignet sich die erfindungsgemäße Verfahrensführung für die Aufarbeitung von eisenarmen Schlacken aus der Ni- und Cu-Verhüttung. Im Falle eisenreicherer Schlacke wird mit Vorteil das Verfahren so geführt, daß eine fayalitische Schlacke gebildet wird, um die Schlackenschmelztemperatur entsprechend herabzusetzen und die Handhabung der Schlacke durch Verringerung der Schlackenviskosität zu erleichtern. In diesen Fällen wird erfindungsgemäß mit Vorteil so vorgegangen, daß bei Vorliegen von Magnetit bzw. Eisenspinell in der Ausgangsschlacke in einer vorgeschalteten Reduktion die Umsetzung zu FeO und die Ausbildung fayalitischer Schlacken vorgenommen wird. Die fayalitische Schlacke wird hiebei durch Umsetzung des gebildeten FeO mit dem SiO₂ der Schlacke ausgebildet.

Wie bereits eingangs erwähnt, kann die chemische Wärme des Spaltgases mit Vorteil dadurch genutzt werden, daß Spaltgas durch das Cu- und/oder Ni- und ggf. Co-Bad hindurchgeleitet wird und das die Schlacke durchsetzende Gas im Gasraum über der Schlacke verbrannt wird.

Den primären und sekundären Ni- bzw. Cu-Hüttenschlacken können Schlacken aus der Verbrennung von Shredderleichtfraktion sowie andere, in hohem Maße buntmetallhältige Schlacken zugesetzt werden. Der saure Charakter derartiger Schlacken erlaubt es in einfacher Weise die gewünschte fayalitische Schlackenzusammensetzung einzustellen.

Mit dem erfindungsgemäßen Verfahren wurde eine primäre Schlacke der Nickelverhüttung mit nachfolgender Richtanalyse

| Komponente | Anteil (Gew.%) |
|---|---|
| CaO | 2,8 |
| Fe₂O₃ | 52 |
| SiO₂ | 32 |
| Al₂O₃ | 6 |
| MgO | 2 |
| Cu | 0,2 |
| Ni | 0,4 |
| Co | 0,2 |
| Cr | 0,5 |
| S | 1,5 |

in einem zweistufigen Reduktionsverfahren auf weitgehend metallfreie Schlacke mit nachfolgender Zusammensetzung geführt. Produktschlacke

| Komponente | Anteil (Gew.%) |
|---|---|
| SiO₂ | 73 |
| Al₂O₃ | 13 |
| MgO | 4 |
| CaO | 6,5 |
| S | 0,8 |

Eine Schlacke mit dieser Zusammensetzung weist puzzolanische Eigenschaften auf, wobei in der ersten Reduktionsstufe mit Spaltgas gearbeitet wurde und eine Cu-, Ni- und Co-Legierung abgezogen wurde. Die weitestgehend buntmetallfreie fayalitische Schlackenschmelze wurde in der Folge einer starken Reduktion unter Verwendung von Kohlenstoff in einem Eisenbadreaktor, wobei eine Eisenchromlegierung gewonnen werden konnte. Die weitestgehend metallfreie Schlacke konnte anschließend granuliert und entsprechend zerkleinert werden, wobei die beiden Reduktionsschritte in gesonderten Konvertern durchgeführt wurden.

Die Granulation kann bei derartigen Zielschlacken in einfacher Weise auch mit Kaltluft durchgeführt werden, da die Kristallbildungsgeschwindigkeit bei derartig sauren Schlacken im Vergleich zu basischen Schlacken wesentlich langsamer ist. Das erhaltene Puzzolan entspricht in seiner Zusammensetzung weitestgehend natürlichen Puzzolanen, wie beispielsweise Santorin Erde, Trass oder Puzzolanen aus den Abbauorten Bacoli und Segni. Lediglich Puzzolane der Herkunft Sacrofano zeichnen sich durch geringere Aluminiumoxidgehalte aus.

Das erfindungsgemäß eingesetzte Wassergas bzw. Spaltgas kann aus einem konventionellen Gasreformer entnommen werden, welchem Erdgas, Methan, Heizöl oder Kohle oder aber auch Alternativbrennstoffe, wie z.B. Pyrolyseöl, gemeinsam mit Sauerstoff, Wasser und CO₂ zum Abstumpfen zugeführt werden. Das Verfahren kann in einem Schmelzkalzinator durchgeführt werden, welcher als diskontinuierlicher Dreh/Schwenkrohrofen ausgebildet sein kann und Feststoffbrenner aufweisen kann. Über derartige Feststoffbrenner können auch die anorganischen Teile von RESH, wie insbesondere Schlacken von Shredderleichtfraktionen zugeführt werden, welche gleichfalls weitestgehend saure Schlacken darstellen und einen relativ hohen Kupfer-, Nickel-, Chrom- und Zinkgehalt aufweisen können. Um sicherzustellen, daß schwefelfreie Schlacken über dem Kupfermetallbad behandelt werden, kann in einem vorgeschalteten oder im ersten Konverter auch eine Entschwefelung bzw. Schwefeloxidation vorgenommen werden, worauf anschließend mit schwefelfreiem Spaltgas reduziert wird.

Spaltgas hat ohne die erfindungsgemäß vorgesehene Zugabe von H₂O-Dampf ein Redoxpotential, welches auch Eisenoxide zu reduzieren in der Lage ist. Das Abstumpfen mit einem Wasserdampfanteil von bis zu 40 Vol.% reicht jedoch aus, um das Spaltgas genügend schwach reduzierend zu machen, sodaß kein weiteres Schlackeneisenoxid mehr reduziert wird.

Die Cu-, Ni-, Co-Legierung hat aufgrund ihres Lösungspotentiales für atomaren Wasserstoff eine Redoxpufferwirkung, wobei die Wärmeübertragung von Gas in die Schmelzphase aufgrund der guten Wärmeleitung der vorgelegten Cu-, Ni-, Co-Legierung in vorteilhafter Weise begünstigt wird. Nach dem Abtrennen der Nichteisenmetalle aus der Schlacke können Eisenoxide unter Verwendung bekannter Technologie aus der Schlacke unter Verwendung von Kohlenstoff reduziert werden, sodaß der Eisengehalt der Schlacke und damit der Einsatzbereich der gebildeten puzzolanischen Produkte wesentlich verbessert wird.

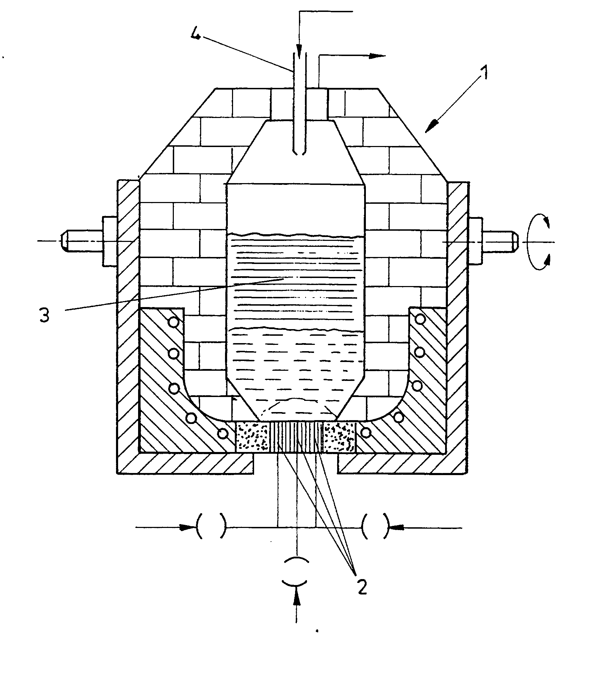

Eine besonders einfache Vorrichtung zur Durchführung des erfindungsgemäßen Verfahrens ist in der Zeichnung dargestellt. In der Zeichnung ist ein Schwenkkonverter 1 dargestellt, welchem ein Cu-, Ni- und ggf. Co-hältiges Bad und die fayalitische Schlackenschmelze, welche Nichteisenmetalle enthält, aufgegeben wird. Das zur Reduktion erforderliche Spaltgas bzw. Wassergas kann im Konverter selbst oder in einem vorgeschalteten Gasreformer hergestellt werden. Für die Herstellung von Wassergas wird über Bodendüsen 2 Wasserdampf und ggf. Sauerstoff sowie Erdgas zugeführt, wobei das durch das Kupferbad geleitete Spaltgas oberhalb der Schlackenschmelze 3 unter Aufblasen von Heißluft über eine Lanze 4 verbrannt werden kann, um die erforderliche Schmelzwärme und die Verlustwärme aufzubringen. Die Einstellung des Redoxpotentiales kann hiebei so erfolgen, daß nicht nur Cu, Ni und Co sondern auf ggf. Zink und Blei bereits reduziert werden, sodaß eine buntmetallfreie aber noch eisenoxidhältige schmelzflüssige Schlacke verbleibt, welche in der Folge nach Auswechseln des Metallbades durch ein Eisenbad im gleichen Konverter oder in einem gesonderten gleichartig aufgebauten Konverter behandelt werden kann, um den Resteisengehalt und ggf. den Restchromgehalt aus der Schlackenschmelze in das Metallbad zu reduzieren.

## Patentansprüche

1. Verfahren zum Umwandeln von Schlacken aus der Nicht-Eisenmetallurgie, insbesondere von primären und sekundären Ni- und Cu-Hüttenschlacken unter Rückgewinnung und/oder Anreicherung der Nichteisenmetalle und Ausbildung von synthetischen Puzzolanen, bei welchem die flüssigen oxidischen Schlacken einer zweistufigen Reduktion mit einer über einem Eisenbad vorgenommenen zweiten Reduktionsstufe unterworfen werden, **dadurch gekennzeichnet, daß** die flüssigen oxidischer Schlacken in einer ersten Reduktionsstufe über einem Cu und/oder Ni und ggf. Co enthaltenden Metallbad mit H₂ und CO enthaltenden Gasen, wie z.B. Spaltgas, reduziert werden, wobei das Redoxpotential des CO/H₂-Gemisches durch Beimengen von 10 bis 40 Vol.% H₂O-Dampf und/oder CO₂ verringert wird, um die Reduktion von Fe-Oxiden hintanzuhalten, worauf die verbleibende Cu- und Ni-freie Schlacke anschließend in der zweiten Reduktionsstufe unter Einsatz von Kohlenstoff zur Reduktion des Fe-Oxidanteiles zur Herstellung einer Fe- und buntmetallfreien Schlacke weiterreduziert wird.

2. Verfahren nach Anspruch 1, **dadurch gekennzeichnet, daß** bei Vorliegen von Magnetit bzw. Eisenspinell in der Ausgangsschlacke in einer vorgeschalteten Reduktion die Umsetzung zu FeO und die Ausbildung fayalitischer Schlacken vorgenommen wird.

3. Verfahren nach Anspruch 1 oder 2, **dadurch gekennzeichnet, daß** in der ersten Reduktionsstufe Spaltgas mit einer Zusammensetzung von 10 bis 75 Vol.% CO, bezogen auf CO₂ und CO, und 3 bis 55 Vol.% H₂, bezogen auf H₂O und H₂, eingesetzt wird.

4. Verfahren nach Anspruch 1, 2 oder 3, **dadurch gekennzeichnet, daß** Spaltgas durch das Cu- und/oder Ni- und ggf. Co-Bad hindurchgeleitet wird und das die Schlacke durchsetzende Gas im Gasraum über der Schlacke verbrannt wird.

## Claims

1. A method for converting nonferrous metallurgical slags, in particular primary and secondary Ni and Cu slags, while recovering and/or enriching the nonferrous metals and forming synthetic puzzolans, in which the liquid oxidic slags are subjected to a two-stage reduction process including a second reduction stage carried out above an iron bath, **characterized in that** the liquid oxidic slags in a first reduction stage are reduced above a metal bath containing Cu and/or Ni and optionally Co by the aid of gases containing H₂ and CO, such as, e.g. cracked gas, wherein the redox potential of the CO/H₂ mixture is reduced by the admixture of 10 to 40 vol.% H₂O vapour and/or CO₂ to prevent the reduction of Fe oxides, whereupon the remaining slag free of Cu and Ni is further reduced in the second reduction stage while using carbon for the reduction of the Fe-oxide portion to produce a slag free of Fe and nonferrous heavy metals.

2. A method according to claim 1, **characterized in that** the reaction to FeO and the formation of fayalitic slags are effected in a preceding reduction process with magnetite and/or iron spinel being present in the starting slag.

3. A method according to claim 1 or 2, **characterized in that** cracked gas having a composition of 10 to 75 vol.% CO, based on CO₂ and CO, and 3 to 55 vol.% H₂, based on H₂O and H₂, is used in the first reduction stage.

4. A method according to claim 1, 2 or 3, **characterized in that** the cracked gas is passed through the bath containing Cu and/or Ni and optionally Co, and that the gas passing through the slag is burned in the gas space above the slag.

## Revendications

1. Procédé destiné à la transformation de scories en provenance de la métallurgie de non ferreux, notamment de scories primaires et secondaires de l'élaboration métallurgique de Ni et Cu, avec récupération et/ou enrichissement des métaux non ferreux et formation de pouzzolanes synthétiques, d'après lequel les scores liquides à teneur en oxydes sont soumises à une réduction en deux étapes avec une seconde étape de réduction effectuée au-dessus d'un bain de fer, **caractérisé en ce que** les stories liquides à teneur en oxydes, au cours d'une première étape de réduction, sont réduites au-dessus d'un bain de métal renfermant Cu et/ou Ni et, le cas échéant, Co, avec des gaz renfermant H₂ et CO, tels que par exemple du gaz de craquage, le potentiel redox du mélange CO/H₂ étant réduit par addition de 10 à 40% en volume de vapeur de H₂O et/ou de CO₂, en vue de retarder la réduction d'oxydes de Fe, suite à quoi, au cours de la seconde étape de réduction, on poursuit alors la réduction des scories restantes exemptes de Cu et de Ni, par utilisation de carbone pour la réduction de la part d'oxydes de Fe pour produire des scories exemptes de Fe et de métaux lourds non ferreux.

2. Procédé selon la revendication 1, **caractérisé en ce qu'**en présence de magnétite ou de spinelle de fer dans les scories initiales, on effectue au cours d'une réduction préalable, la transformation en FeO et la formation de scories du type fayalite.

3. Procédé selon la revendication 1 ou 2, **caractérisé en ce que** dans la première étape de réduction, on utilise du gaz de craquage de la composition suivante, à savoir 10 à 75% en volume de CO relativement à CO₂ et CO, et de 3 à 55% en volume de H₂ relativement à H₂O et H₂.

4. Procédé selon la revendication 1, 2 ou 3, **caractérisé en ce que** du gaz de craquage est envoyé à travers le bain de Cu et/ou de Ni et, le cas échéant, de Co, et le gaz traversant les scories est brûlé dans la chambre de gaz au-dessus des scories.
